# EUROPEAN PATENT SPECIFICATION

(11) **EP 1 967 951 B1**
(45) Date of publication and mention of the grant of the patent: **06.03.2013**
(21) Application number: 08101530.7
(22) Date of filing: 12.02.2008
(51) Int. Cl.: G06F 11/07

(54) **Method and circuit for bus activity detection and system recovery**
Verfahren und Schaltung zur Erkennung von Busaktivität und zur Systemwiederherstellung
Procédé et circuit pour détecter l'activité sur un bus et rétablir le système

(30) Priority: 23.02.2007 TR 200701134
(43) Date of publication of application: 10.09.2008
(73) Proprietor: Vestel Elektronik Sanayi ve Ticaret A.S., 45030 Manisa (TR)
(72) Inventor: Cetin, Huseyin Erturk, Manisa 45030 (TR)
(74) Representative: Cayli, Hülya

(56) References cited:
- US-A- 4 434 403
- US-A- 4 811 200
- US-A- 5 864 656
- US-A- 6 003 146
- US-A- 6 018 803
- US-A1- 2006 242 517
- CHUN R K: "ARINC 429 DIGITAL DATA COMMUNICATIONS FOR COMMERCIAL AIRCRAFT", JOURNAL OF GUIDANCE AND CONTROL AND DYNAMICS, AIAA, RESTON, VA, US, vol. 6, no. 2, 1 March 1983 (1983-03-01), pages 120-123, XP009010248, ISSN: 0731-5090

## Description

### Technical Field

This invention relates to a universal method and circuit for bus activity detection and system recovery, particularly for microcomputer systems with a communication bus such as a television main-board's microcontroller.

### Prior Art

Not only in computer, but also within consumer electronic goods, internal register flags are used to detect the bus activity. For example, in an IDTV set, main-board and DVB module card communicate using universal asynchronous receiver-transmitter (UART). In main-board itself, microcontroller and its peripherals (tuner, video processor, etc.) communicate using inter-integrated circuit (12C).

When using an (UART), the microcontroller has a dedicated register flag for monitoring the (UART) communication. If the communication fails after the system is reset or restarted, this flag is set and the microcontroller behaves according to this flag: reset the (DVB) microcontroller, re-transmit the last data, etc.

When using (12C), the microcontroller, as being master, monitors its peripherals and the peripherals communicate as slave ICs. If one of the peripherals fails to response to the master's command, the master resets it.

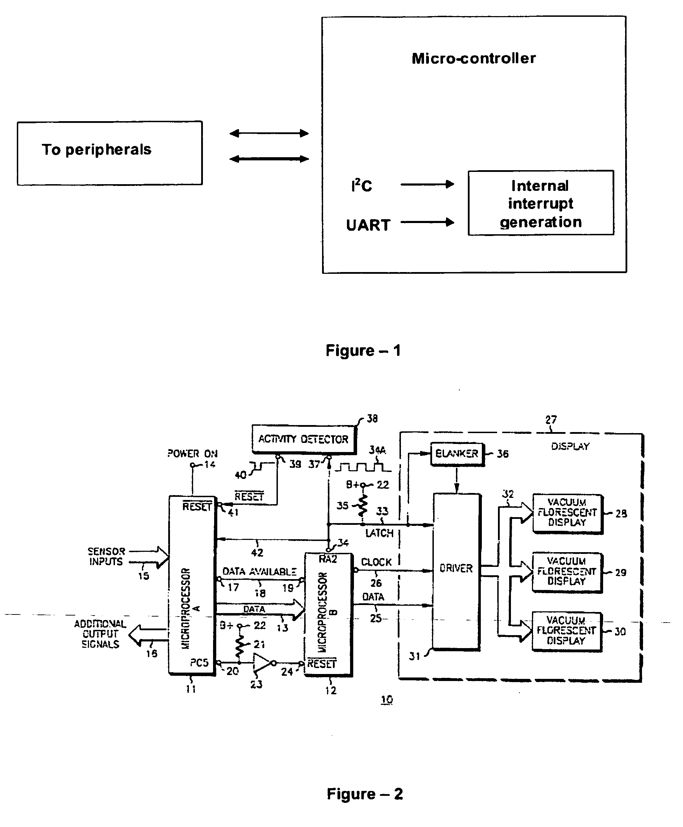

In both cases, microcontroller is assumed to have a dedicated register/block for monitoring the communication bus, as may be seen in Figure 1.

If the microcontroller has no dedicated part (register/block) for monitoring the bus activity, the system cannot detect the bus failure and take the correct action which causes a complete system crush.

Moreover, it is also possible that when the bus communication fails, the microcontroller itself may also fail to do its jobs, such as configuring general-purpose input-output (GPIO) ports. In such a case, the peripherals that need to be handled by these (GPIO) ports, lack both the bus communication and (GPIO) action. This means that the system is in a failure state.

The existence of fault detection and reset system is known from US4434403, where the clock signal should be checked periodically; whereas, within above described systems (just like 12C) the clock signal may not be continuous. The described technology is also not compatible with one sided data buses.

Another common system to overcome fault conditions occurred in data transmission systems is the watchdog system (also referred as "watchdog timer"). The system provides a software protection and resets the software in fault conditions; the faults due to hardware crushes can not be corrected by the watchdog system.

US4811200 describe the watchdog systems in which software and/or hardware is provided to monitor system operation and implement microprocessor resets in the event of improper system operation. In this document, the controllers within those systems require data bus activity responsive terminals and not compatible with various kind of buses, shown in Figure 2.

In the patent document US 2006 0242517, a monitoring logic which monitors the data bus activity between data processor and memory in a data processing apparatus is described. Monitoring logic detects a particular data access travelling along said data bus within predetermined time. Said predetermined time is counted via a counter in monitoring logic and if no detection of data access travelling is occurred within predetermined time, data processor performs a predetermined operation. Disclosed logic and method in US 2006 0242517, differently from present invention uses a counter for counting predetermined time and it is used only for monitoring bus activity between data processor and memory. However, present invention can be used for all kinds of buses having periodical signal transmissions.

US5864656 discloses a system which monitors a data bus and measures a time delay between two consecutive data transfers. If said time delay is above a predetermined limit, a software and hardware recovery is launched.

As a conclusion, prior art systems require specialized registers/blocks inside the microcontroller to generate an interrupt. The existing systems for fault detection and correction for data buses are not compatible for all kind of bus systems. The main microcomputer is responsive of other peripherals, but complete system failure occurs if both the microcontroller and the peripheral fail to communicate.

### Summary of the Invention

In accordance with the present invention, the universal bus activity fault detection and resetting circuit comprises;
- means for setting a time constant for fault detection on the basis of input data relating to a data period of the bus and,
- detecting means for detecting a condition of activity or non activity on said bus, said detecting means generating a reset output on the basis of said time constant and said non activity condition.

Preferably the circuit further comprises means for determining said data period of the bus, sending said input data to said means for setting a time constant.

Preferably, the means for determining a time constant select one time constant value among a number of different given time constant values.

Preferably, said detecting means comprises an input circuit determining an average value of the data signal on said bus; an activity detection circuit receiving at the input said average value through said time constant, so as to generate said reset output if said average value is indicative of non activity on said bus.

Preferably, said average value indicative of non activity on said bus determines the conductivity condition of diode means which change the output level of said activity detection circuit through said time constant, so as to generate said reset output as a switching status of said activity detection circuit.

Preferably the method further comprises a step of determining said input data relating to said data period of the bus.

The present invention provides a detection and correction system which offers advantages of the state of the art. It offers universal bus fault detection and correction system for system crushes which is applicable to all kind of buses having periodic data transmission. Also, it does not require any specialized registers/blocks inside the microcontroller to generate an interrupt. Furthermore, this invention not only gives solutions to software crushes but also solves hardware based crushes.

### Object of the Invention

The object of the invention is to provide a universal method and circuit for bus activity and system recovery by monitoring the bus signal externally, detecting bus type, setting time constants for bus types and generating an output signal for the interrupt/reset pins of the microcontroller and/or the peripheral ICs in a fault condition.

A further object of the invention is a universal bus activity fault detection and resetting method, comprising the steps of: determining a time constant for fault detection on the basis of input data relating to a data period of the bus; detecting a condition of activity or non activity on said bus, said detecting means generating a reset output on the basis of said time constant and said non activity condition.

Also it is aimed by this invention to provide a detection and correction system which gives solutions to software crushes but also solving hardware based crushes without requiring any specialized registers/blocks inside the microcontroller to generate an interrupt.

### Description of the Drawings

The invention is illustrated in the appended figures, in which;
Figure 1 is an explanatory block diagram showing a microcontroller monitoring the communication bus.
Figure 2 is a schematic block diagram showing a multiple microprocessor watchdog system.
Figure 3 is an explanatory block diagram showing a circuit composed of five general block diagrams.
Figure 4 is an explanatory block diagram showing an embodiment of the bus period detector.
Figure 5 is an explanatory block diagram showing an inside architecture of (B) labelled blocks.
Figure 6 is an explanatory block diagram showing an establishment of the invention where t period is selected to be 1 second for practical applications.
Figure 7a is a chart diagram showing the measured values where the emitter of (Q1) follows the input signal.
Figure 7b is a chart diagram showing the measured values where the emitter of (Q2) follows the base.
Figure 7c is a chart showing the measured values where the collector of (Q3) inversely follows the input signal.
Figure 7d is a chart showing an example of bus failure.

### Description of the Invention

The circuit and method of the present invention can work for all systems having a microcontroller with an interrupt/reset port and a communication bus.

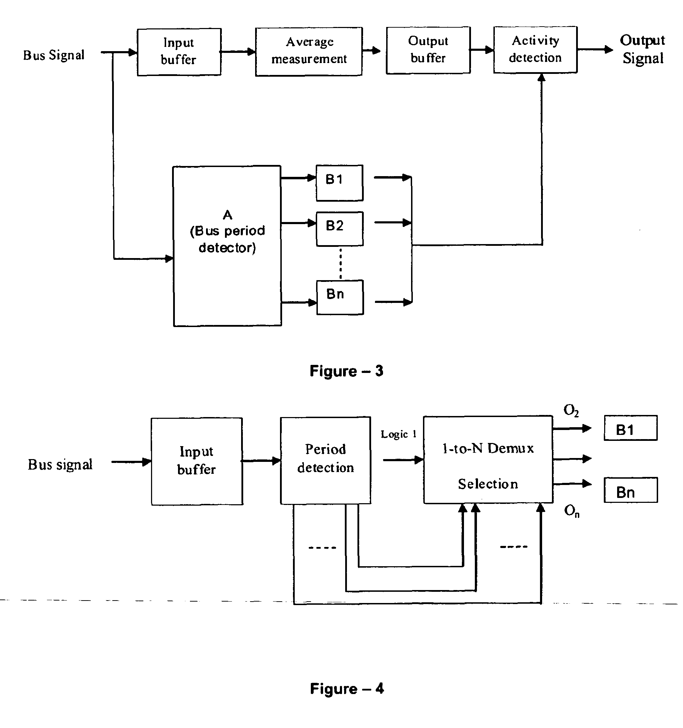

According to the invention, the circuit is basically composed of five general block diagrams as depicted in Figure 3.

The main task of the present invention is to detect the period of used data transfer protocol, and then adjusting itself by means of setting time constant for fault detection within that particular bus, and to take action in case of error condition.

By means of having adjustable time constant within an error detection and correction system, the particular system can be used within systems having different periods for data transfer intervals. (such as UART and 12C)

In figure 3, the first block is an emitter-follower circuit that is used as an input buffer. The aim of using an input-buffer is to make examinations on data bus signals without corrupting them. The second block which is called an "average measurement" takes the DC average of the incoming signal. This average value is used to control the transistor of the next block. The third block which is called an "output buffer" is used to buffer and invert the incoming signal. The fourth block gives an output (low or high) according to the input signal. The (A) labeled block provides the adjustment of the invention to any type of data bus which uses periodic signals.

After detecting the period of the bus, the invention enables one of the (B) labelled blocks to establish a dynamic time constant for bus fault detection system. The B blocks have different resistance values. The embodiment of the (A) labelled block is depicted in Figure 4 where, according to periodical bus activities, one of the resistor values inside the (B) labelled blocks are enabled and a universal bus fault detection circuit is established.

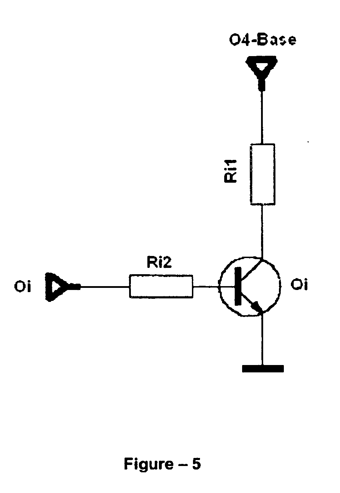

As illustrated above, the (B) labelled blocks have different resistance values to establish a bus fault detection and correction circuit applicable to all kind of buses. The inner architecture of B blocks is depicted in figure 5.

In a communication and data transmission system, the bus signal input is generally active low, i.e., in case of failure, the bus voltage level remains in high (idle) state. In this method, a periodicity in the bus signal is assumed. For example, a TV microcontroller transmits a SCL signal on the 12C line every t seconds.

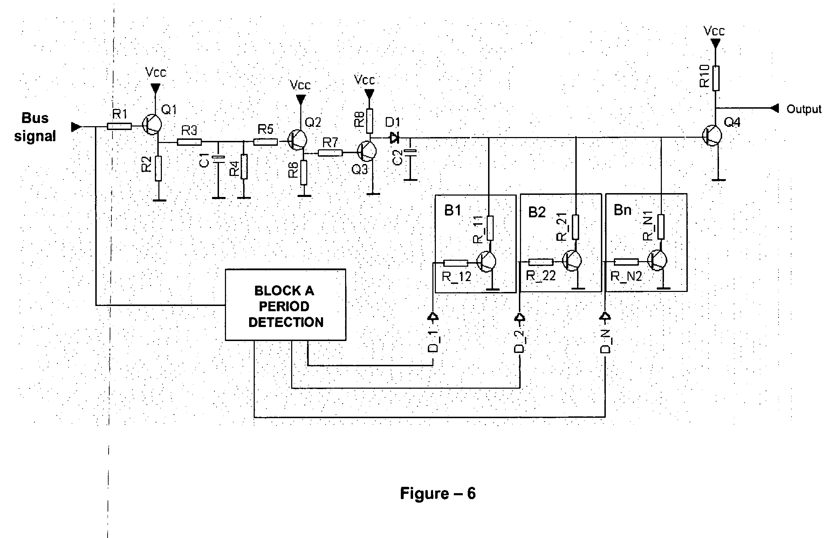

In Figure 6 an establishment of invention is represented where period t is selected to be 1 second for practical applications.

The principle of the invention will be explained step by step with the measured values.

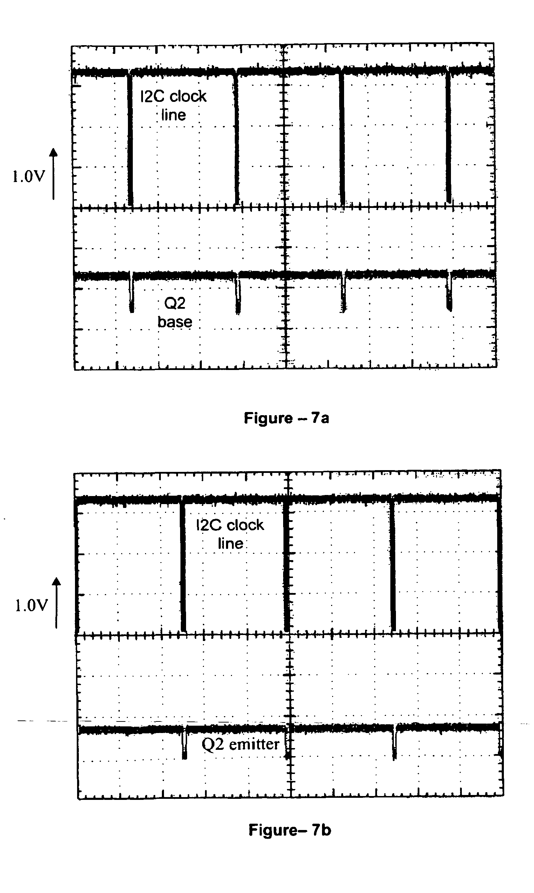

In Figure 7a, the emitter of (Q1) follows the input signal, where (C1) and (R4) values determine the time constant.

Within the next step the emitter of (Q2) can now turn on and off (Q3) transistor; the measurement is shown in Figure 7b.

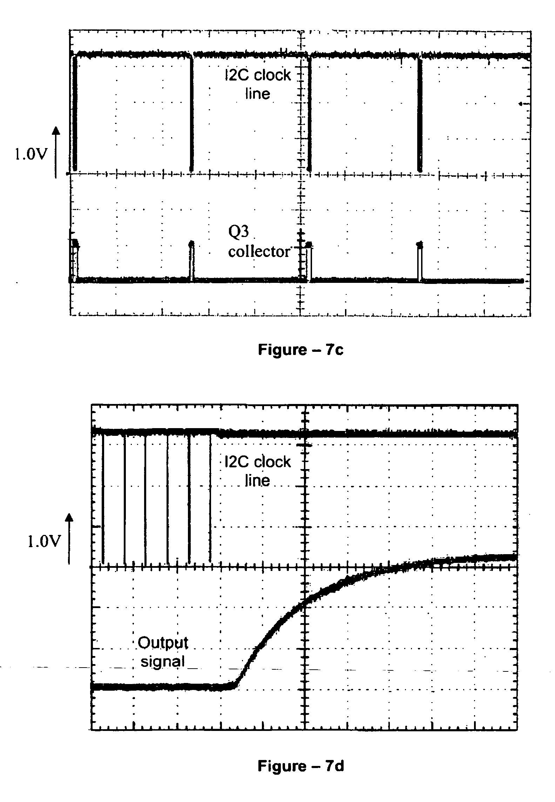

The high values on the collector of (Q3) will turn on the (D1) diode. (C2) and resistance values in (B) labelled blocks in Figure 6 determine the time constant for bus activity detection. The measurement is shown in figure 7c.

In this embodiment, the time constant is adjusted manually and figures 7a, 7b,7c and 7d are sketched due to this fact; but the features of the invention vary the resistance values for different bus types and establishes a dynamic bus fault detection and correction system for all kinds of buses having periodical signal transmissions. The (A) labelled block depicted in Figure 4 is coupled to the bus for time constant detection, and (B) labelled blocks varies resistance values to establish a dynamic bus fault detection and correction system.

In the case of error, the high values on the collector of (Q3) will turn on the (D1) diode. As it is seen from figure 4, in a fault condition the system detects a fault and responses with an output. The output of the invention should be coupled to reset circuit of microprocessor or peripheral. An example of the bus failure is shown in figure 7d.

According to the first embodiment of the present invention, the universal bus activity fault detection and resetting circuit comprises; means (C2, B1...Bn) for setting a time constant for fault detection on the basis of input data relating to said data period; detecting means (Q1, Q2, Q3, Q4) for detecting a condition of activity or non activity on said bus, said detecting means generating a reset output on the basis of said time constant and said non activity condition.

Preferably the circuit further includes means (BLOCK A) for determining said data period of the bus.

Preferably, said means (C2, B1...Bn) for determining a time constant select one time constant value among a number of different given time constant values (B1... Bn).

According to the second embodiment of the present invention, the universal bus activity fault detection and resetting circuit comprises means (BLOCK A) for determining the data period of the bus; means (C2, B1... Bn) for determining a time constant for fault detection on the basis of said data period; detecting means(Q1, Q2, Q3, Q4) for detecting a condition of activity or non activity on said bus, said detecting means generating a reset output on the basis of said time constant and said non activity condition.

Preferably, said detecting means comprises an input circuit (Q1, Q2, Q3) determining an average value of the data signal on said bus; and an activity detection circuit (Q4) receiving at the input said average value through said time constant, so as to generate said reset output if said average value is indicative of non activity on said bus.

More preferably, said average value indicative of non activity on said bus determines the conductivity condition of diode means (D1) which change the output level of said activity detection circuit (Q4) through said time constant, so as to generate said reset output as a switching status of said activity detection circuit (Q4).

Therefore the invention further includes a universal bus activity fault detection and resetting method, comprising the steps of: determining a time constant for fault detection on the basis of input data relating to a data period of the bus; detecting a condition of activity or non activity on said bus, said detecting means generating a reset output on the basis of said time constant and said non activity condition.

Preferably the method further comprises a step of determining said input data relating to said data period of the bus.

## Claims

1. A bus activity detection and resetting circuit for inter-integrated circuit bus, which comprises
• a manually adjusted means (C2, B1, B2,Bn) for setting a time constant which selects one time constant value among a number of different given time constant values (B1, B2,Bn);
• detecting means (Q1, Q2, Q3, Q4) for detecting a condition of activity or non activity on said bus, comprising an input circuit (Q1, Q2 and Q3) which determines an average DC value of a data signal on said inter-integrated circuit bus and an activity detection circuit (Q4) which generates reset output if said average DC value is indicative of non activity on said bus for a time defined by said adjusted time constant wherein said input circuit comprises:
• an emitter-follower circuit (Q1) that is used as an input buffer;
• an average measurement block which takes DC average of the data signal;
• an output buffer (Q3) which buffers and inverts the DC averaged signal, wherein high values on a transistor collector of said output buffer (Q3) turn on a (D1) diode and charge a capacitor (C2); wherein the charge and discharge of said capacitor (C2) are two functions of time with said adjusted time constant as a parameter;
• and wherein said activity detection circuit comprises a fourth block which generates said reset output as a high or low signal in accordance with a voltage of said capacitor (C2); and
• a reset output port for outputting said reset output signal.

2. A bus activity detection and resetting method for inter-integrated circuit bus, **characterized in that** it comprises the following steps of:
• manually adjusting a time constant by selecting one time constant value among a number of different given time constant values;
• determining an average DC value of a data signal on said inter-integrated circuit bus;
• detecting a condition of activity or non activity for a time defined by said adjusted time constant on said inter-integrated circuit bus with regard to said determined DC average value; generating a reset output on the basis of said time constant if said average DC value is indicative of non activity on said bus.

## Patentansprüche

1. Ein Busaktivitätsdetektions- und rücksetzschaltkreis für einen Inter-Integrated Circuit Bus, aufweisend
- manuell eingestellte Mittel (C2, B1, B2, Bn) zum Einstellen einer Zeitkonstante, welche einen Zeitkonstantenwert aus einer Anzahl unterschiedlicher vorgegebener Zeitkonstantenwerte (B1, B2, Bn) auswählen;
- Detektionsmittel (Q1, Q2, Q3, Q4) zur Detektion eines Aktivitäts- oder Nichtaktivitätszustandes auf dem Bus, aufweisend einen Eingangsschaltkreis (Q1, Q2 und Q3), der einen mittleren Gleichstromwert eines Datensignals auf dem Inter-Integrated Circuit Bus ermittelt, und einen Aktivitätsdetektionsschaltkreis (Q4), welcher einen Rücksetzausgang generiert, wenn der mittlere Gleichstromwert Nichtaktivität auf dem Bus für eine Zeit, definiert durch die eingestellte Zeitkonstante, anzeigt, wobei der Eingangsschaltkreis aufweist:
- einen Emitterfolgerschaltkreis (Q1), welcher als Eingangspuffer eingesetzt ist,
- einen Durchschnittsmessblock, welcher den mittleren Gleichstromwert des Datensignals nimmt,
- einen Ausgangspuffer (Q3), welcher das mittlere Gleichstromsignal puffert und invertiert, wobei hohe Werte an einem Transistorkollektor des Ausgangspuffers (Q3) eine Diode (D1) einschalten und einen Kondensator (C2) aufladen, wobei die Ladung und Entladung des Kondensators (C2) zwei Zeitfunktionen mit der eingestellten Zeitkonstante als Parameter sind;
- und wobei der Aktivitätsdetektionsschaltkreis einen vierten Block aufweist, welcher den Rücksetzausgang generiert als ein hohes oder niedriges Signal entsprechend einer Spannung des Kondensators (C2); und
- einen Rücksetzausgangsport, um das Rücksetzausgangssignal auszugeben.

2. Ein Verfahren zur Busaktivitätsdetektion und Rücksetzung für einen Inter-Integrated Circuit Bus, **dadurch gekennzeichnet, dass** dieses die folgenden Schritte aufweist:
- manuelles Einstellen einer Zeitkonstante durch Auswählen einer Zeitkonstante aus einer Anzahl unterschiedlicher vorgegebener Zeitkonstantenwerte;
- Feststellen eines mittleren Gleichstromwertes eines Datensignals auf dem Inter-Integrated Circuit Bus;
- Detektieren eines Aktivitäts- oder Nichtaktivitätszustandes auf dem Inter-Integrated Circuit Bus für eine Zeit, welche durch die eingestellte Zeitkonstante definiert ist unter Berücksichtigung des festgestellten mittleren Gleichstromwertes; Generieren eines Rücksetzausgangs auf Basis der Zeitkonstante, falls der mittlere Gleichstromwert Nichtaktivität auf dem Bus anzeigt.

## Revendications

1. Circuit de détection et de rétablissement d'activité de bus pour un bus à liaison de circuits intégrés (I2C), qui comprend :
- un moyen ajusté manuellement (C2, B1, B2, Bn) permettant d'établir une constante de temps qui sélectionne une valeur de constante de temps parmi un certain nombre de différentes valeurs de constante de temps données (B1, B2, Bn);
- un moyen de détection (Q1, Q2, Q3, Q4) permettant de détecter un état d'activité ou de non-activité sur ledit bus, comprenant un circuit d'entrée (Q1, Q2 et Q3) qui détermine une valeur de courant continu moyenne d'un signal de données sur ledit bus de liaison de circuits intégrés et un circuit de détection d'activité (Q4) qui génère une sortie de rétablissement si ladite valeur de courant continu moyenne indique une non-activité sur ledit bus pendant un temps défini par ladite constante de temps ajustée, dans lequel ledit circuit d'entrée comprend :
- un circuit suiveur d'émetteur (Q1) qui est utilisé en tant que mémoire tampon d'entrée ;
- un bloc de mesure moyenne qui prend la moyenne de courant continu du signal de données ;
- une mémoire tampon de sortie (Q3) qui met en mémoire tampon et inverse le signal dont la moyenne de courant continu a été prise, dans lequel des valeurs élevées sur un collecteur de transistor de ladite mémoire tampon de sortie (Q3) activent une diode (D1) et chargent un condensateur (C2) ; dans lequel la charge et la décharge dudit condensateur (C2) sont deux fonctions du temps de ladite constante de temps ajustée en tant que paramètre ;
- et dans lequel ledit circuit de détection d'activité comprend un quatrième bloc qui génère ladite sortie de rétablissement en tant que signal élevé ou faible en conformité avec une tension dudit condensateur (C2) ; et
- un port de sortie de rétablissement pour émettre en sortie ledit signal de sortie rétabli.

2. Procédé de détection et de rétablissement d'activité de bus pour un bus à liaison de circuits intégrés, **caractérisé en ce qu'**il comprend les étapes suivantes consistant à :
- ajuster manuellement une constante de temps en choisissant une valeur de constante de temps parmi un certain nombre de valeurs de constante de temps données différentes ;
- déterminer une valeur de courant continu moyenne d'un signal de données sur ledit bus à liaison de circuits intégrés ;
- détecter un état d'activité ou de non-activité pendant un temps défini par ladite constante de temps ajustée sur ledit bus à liaison de circuits intégrés par rapport à ladite valeur de courant continu moyenne déterminée ; générer une sortie de rétablissement en se basant sur ladite constante de temps si ladite valeur de courant continu moyenne indique une non-activité sur ledit bus.
